(19) Europäisches Patentamt
European Patent Office
Office européen des brevets

(11) **EP 3 248 201 B1**

(12) **EUROPÄISCHE PATENTSCHRIFT**

(45) Veröffentlichungstag und Bekanntmachung des Hinweises auf die Patenterteilung:
**20.03.2019 Patentblatt 2019/12**

(51) Int Cl.:
*H01G 9/20* *(2006.01)*         *B01J 23/18* *(2006.01)*
*B01J 23/22* *(2006.01)*         *C09C 1/00* *(2006.01)*

(21) Anmeldenummer: **16701147.7**

(22) Anmeldetag: **21.01.2016**

(86) Internationale Anmeldenummer:
**PCT/EP2016/051193**

(87) Internationale Veröffentlichungsnummer:
**WO 2016/116540 (28.07.2016 Gazette 2016/30)**

(54) **ELEKTRODE ZUR PHOTOELEKTRISCHEN KATALYSE, SOLARZELLE UND VERFAHREN ZU DEREN HERSTELLUNG**

ELECTRODE FOR PHOTOELECTRIC CATALYSIS, SOLAR CELL, AND METHOD FOR PRODUCING SAID ELECTRODE

ÉLECTRODE DE CATALYSE PHOTOÉLECTRIQUE, CELLULE SOLAIRE ET SON PROCÉDÉ DE FABRICATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.01.2015 DE 102015200958**

(43) Veröffentlichungstag der Anmeldung:
**29.11.2017 Patentblatt 2017/48**

(73) Patentinhaber: **Technische Universität Berlin**
**10623 Berlin (DE)**

(72) Erfinder:
• LUBLOW, Michael
  14109 Berlin (DE)
• FISCHER, Anna
  10967 Berlin (DE)
• DRIESS, Matthias
  10557 Berlin (DE)
• PFROMMER, Johannes
  21075 Hamburg (DE)
• SCHEDEL-NIEDRIG, Thomas
  14532 Kleinmachnow (DE)
• KANIS, Michael
  13156 Berlin (DE)
• AZARPIRA, Anahita
  14109 Berlin (DE)

(74) Vertreter: **Gulde & Partner**
**Patent- und Rechtsanwaltskanzlei mbB**
**Wallstraße 58/59**
**10179 Berlin (DE)**

(56) Entgegenhaltungen:
**EP-A1- 2 202 837**

• **TOMAS LEIJTENS ET AL: "Hole Transport Materials with Low Glass Transition Temperatures and High Solubility for Application in Solid-State Dye-Sensitized Solar Cells", ACS NANO, Bd. 6, Nr. 2, 28. Februar 2012 (2012-02-28), Seiten 1455-1462, XP55136015, ISSN: 1936-0851, DOI: 10.1021/nn204296b**
• **TSAI CHIH-HUNG ET AL: "Novel three-layer TiO2nanoparticle stacking architecture for efficient dye-sensitized solar cells", ORGANIC ELECTRONICS, Bd. 14, Nr. 11, 29. August 2013 (2013-08-29), Seiten 2866-2874, XP028736324, ISSN: 1566-1199, DOI: 10.1016/J.ORGEL.2013.08.014**
• **P. M. SOMMELING ET AL: "Influence of a TiCl 4 Post-Treatment on Nanocrystalline TiO 2 Films in Dye-Sensitized Solar Cells", THE JOURNAL OF PHYSICAL CHEMISTRY B, Bd. 110, Nr. 39, 1. Oktober 2006 (2006-10-01), Seiten 19191-19197, XP55064040, ISSN: 1520-6106, DOI: 10.1021/jp061346k**

- **SCOTT S. DUNKLE ET AL: "BiVO 4 as a Visible-Light Photocatalyst Prepared by Ultrasonic Spray Pyrolysis", JOURNAL OF PHYSICAL CHEMISTRY C, Bd. 113, Nr. 28, 16. Juli 2009 (2009-07-16), Seiten 11980-11983, XP55266522, US ISSN: 1932-7447, DOI: 10.1021/jp903757x**

**Beschreibung**

Die Erfindung betrifft eine Elektrode zur photoelektrischen Katalyse umfassend Partikel aus einem Halbleitermaterial, sowie eine Solarzelle mit einer solchen und ein Verfahren zu deren Herstellung.

Photokatalytsche Elektroden weisen eine Oberfläche auf, die photoaktiv ist, das heißt, deren Material infolge eines inneren Photoeffekts durch Lichtanregung Elektronen-Loch-Paare generiert. Dadurch erhöht sich infolge Beleuchtung die Leitfähigkeit und die zu einer Reaktion erforderliche Überspannung einer zu katalysierenden Reaktion wird herabgesetzt.

Photokatalytische Elektroden finden beispielsweise bei der (photo)elektrochemischen Wasserspaltung ($H_2O \rightarrow H_2 + \frac{1}{2} O_2$) für die Gewinnung alternativer Brennstoffe oder bei der Reaktion von Kohlendioxid zu Kohlenmonoxid oder Kohlenwasserstoffen mit niedriger Oxidationszahl Verwendung.

Derartige photokatalytische Elektroden sind beispielsweise durch elektrophoretische Abscheidung (EPD) von Pigmentpulvern auf einer Substratoberfläche (support) herstellbar. Die elektrophoretische Abscheidung, ist ein weit verbreiteter industrieller Prozess, bei dem kolloidale Partikel unter Einfluss eines elektrischen Feldes auf einer Elektrode abgeschieden werden. Beispielsweise ist EP 2 202 837 A1 die typische Anordnung einer Farbstoffsensibilisierten Elektrode zu entnehmen.

Die elektrophoretische Abscheidung von photoaktiven, im Labor synthetisierten Materialien in Pulverform ist Stand der Technik. Bekanntestes Beispiel der jüngeren Forschung ist die Abscheidung von Tantaloxidnitriden (TaON) auf leitfähigen Substraten. Andere Arbeiten, in denen ein elektrophoretisches Verfahren eingesetzt wurde, beinhalten die Herstellung von nicht-photoaktiven Filmen aus Materialien wie Yttrium- oder Cerbasierten Oxiden.

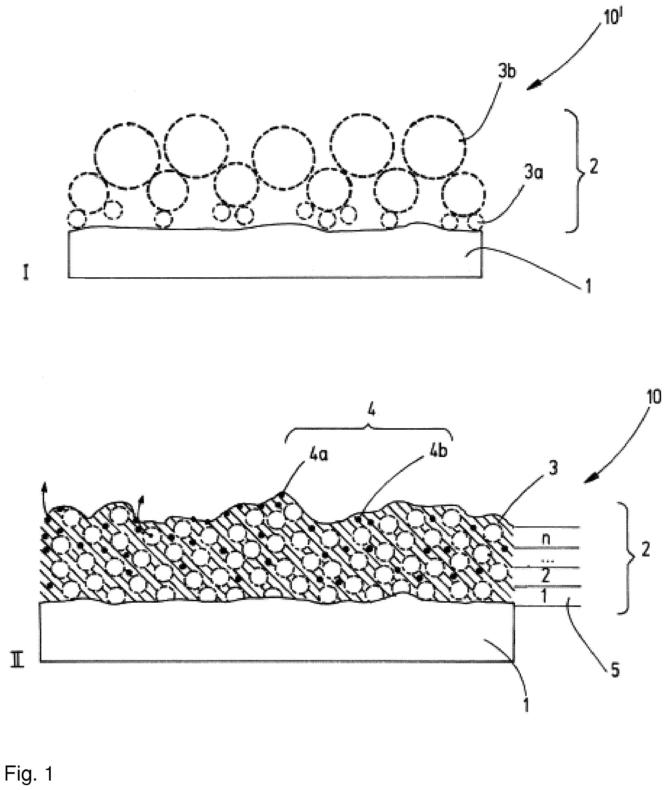

Bei den abzuscheidenden Partikeln handelt es sich zumeist um Partikel, die im Labormaßstab gefertigt werden, um den hohen qualitativen Ansprüchen gerecht zu werden. Zur Darstellung hochwertiger Elektroden werden insbesondere hohe Ansprüche an eine geringe Variation der Partikelgröße sowie an deren Materialeigenschaften, wie beispielsweise Defektdichte an der Partikeloberfläche, gestellt. Partikel, insbesondere Pigmentpartikel, aus industrieller Fertigung genügen diesen Ansprüchen nicht, da diese als Pigmentpulver bereitgestellt werden, die eine relativ große Variation der Partikelgröße aufweisen. Die Verwendung derartiger Pulver zur Elektrodenherstellung mittels EPD führt zu Elektroden, die eine inhomogene Verteilung von Partikeln in der katalytischen Schicht aufweisen (Fig. 1). Dies rührt daher, dass sich während der EPD kleinere Partikel aufgrund geringerer Strömungswiderstände schneller auf der Substratoberfläche abscheiden als größere Partikel.

Zudem weisen industriell erhältliche Materialien eine hohe Anzahl von Defektstellen auf, was zu einer hohen Rekombinationsrate im Material und an der Oberfläche der Partikel führt und die Qualität der Elektrode deutlich reduziert.

Die Herstellung von (Pigment-)Partikeln hoher Qualität vor der EPD erfordert jedoch ein großes Maß an Aufwand und Kosten, so dass es Aufgabe der Erfindung ist, eine kostengünstige, qualitativ hochwertige Elektrode sowie ein kostengünstiges Verfahren zu deren Herstellung bereitzustellen.

Diese Aufgabe wird durch eine Elektrode und ein Verfahren mit den Merkmalen der unabhängigen Ansprüche gelöst.

Somit betrifft ein erster Aspekt der Erfindung eine Elektrode zur photoelektrischen Katalyse, umfassend eine Trägerschicht, auf der eine katalytische Schicht angeordnet ist, die Partikel aus einem ersten Halbleitermaterial umfasst. Erfindungsgemäß weist die katalytische Schicht ferner eine ein zweites Halbleitermaterial umfassende Matrix auf. Diese Matrix ist derart angeordnet, dass sie die Partikel zumindest teilweise umhüllt (einbettet).

Der Vorteil der erfindungsgemäßen Elektrode liegt insbesondere darin, dass die Matrix einen Abtransport der durch den Photoeffekt generierten und durch die Partikel-Matrix-Grenzfläche separierten Ladungsträger begünstigt und somit eine Rekombination der separierten Ladungsträger an der Partikeloberfläche hemmt. Damit bleibt die Leitfähigkeit des Materials bei Bestrahlung mit Licht über längere Strecken erhalten als bei herkömmlichen Materialien, bei der eine Ladungsträgermigration nur über angrenzende Partikel stattfindet. In der Folge wird bei erfindungsgemäßen Elektroden eine höhere Qualität und insbesondere unter Bestrahlung ein höherer Photostrom beziehungsweise eine höhere Photospannung erzielt.

Dieser Effekt wird umso größer, je weniger Partikel Bereiche aufweisen, in denen sie weder zu anderen Partikeln noch zur Matrix Kontakt haben. Somit ist besonders bevorzugt, dass die Matrix die Partikel allseits umgibt, die Partikel in das Matrixmaterial sozusagen eingebettet sind.

Unter photoelektrische Elektrode wird vorliegend sowohl eine photoelektrochemische, als auch eine photovoltaische Elektrode verstanden. Die photoelektrochemische Elektrode ist dabei an einen Elektrolyten angeordnet, der gemeinsam mit der Elektrode eine elektrochemische Halbzelle bildet, wohingegen die photovoltaische Elektrode an einen Ionenleiter angrenzt, welcher insbesondere ein Redoxpaar umfasst und infolge der photovoltaischen Reaktion nicht verbraucht wird.

Photoelektrochemische Zellen oder PEC's sind Solarzellen und wandeln sichtbares Licht in elektrische Energie um. Eine Zelle besteht aus einer Halbleiter-Photoanode, einer Kathode aus Metall und einem Elektrolyten. Die Zellen erzeugen entweder direkt elektrische Energie, oder sie erzeugen Wasserstoff in einem Prozess ähnlich der Elektrolyse von Wasser.

Bei der Trägerschicht handelt es sich um ein elektrisch leitfähiges Material, auf welchem die katalytische Schicht angeordnet ist. Die Trägerschicht definiert insbesondere die äußere Form und Größe der Elektrode und ist an einen elektrischen Kreislauf anschließbar.

Die katalytische Schicht umfasst Partikel und Matrix und ist photoaktiv. Das heißt, vorzugsweise zeigen sowohl die Partikel, als auch die Matrix einen inneren Photoeffekt, insbesondere Photoleitung. Damit ist die katalytische Schicht ausgebildet, insbesondere Reaktionen elektrochemisch zu katalysieren.

Bei den Partikeln handelt es sich vorzugsweise um Pigmentpartikel, insbesondere Farbpigmentpartikel. Die Pigmente weisen photoaktive Eigenschaften auf und sind in dem verwendeten Anwendungsmedium, zum Beispiel einem Lösungsmittel, nicht löslich (DIN 55944). Die Partikel umfassen ein Halbleitermaterial, welches vorzugsweise zumindest ein Metall beziehungsweise ein Metallion umfassen.

Bei den Elektroden handelt es sich vorzugsweise um flächige Elektroden, bei denen die zur Reaktion erforderlichen Überspannungen (z.B. zur Oxidation von Wasser) durch die Photoaktivität der katalytischen Schicht, insbesondere der Pigmente, reduziert sind. Diese Reduktion wird durch den inneren Photoeffekt der Partikel bei der lichtangeregten Generation von Elektron-Loch Paaren ermöglicht, d.h. es baut sich eine Photospannung auf, die nicht durch eine äußere Spannungsquelle gespeist werden muss und somit Elektrodenreaktionen bei niedrigeren Gesamtspannungen erlaubt. Die hierbei auftretenden Stromdichten werden von Ladungsträgern getragen (Elektronen bei einer Reduktionsreaktion bzw. Löcher bei einer Oxidationsreaktion), die ausschließlich oder mehrheitlich lichtinduziert sind, also bei fehlender Beleuchtung nicht auftreten.

Erfindungsgemäß ist vorgesehen, dass zumindest 90% der Partikel eine Abweichung von einem mittleren Partikeldurchmesser von höchstens 20%, vorzugsweise von höchstens 15% insbesondere von höchstens 10% aufweisen, die Partikel also monodispers verteilt vorliegen. Vorteilhafterweise stellt diese Ausgestaltung sicher, dass die Elektrode, beziehungsweise die katalytische Schicht der Elektrode, in allen Abschnitten beziehungsweise Teilbereichen die gleichen elektrochemischen, insbesondere elektrischen Eigenschaften aufweist.

Eine Ansammlung von Partikeln oder Einzelteilen mit gleichen Eigenschaften (physikalische, chemische oder organische) wird als monodispers bezeichnet. Je nach zulässiger Standardabweichung, Anwendung oder Größenklassen kann auch nur eine Eigenschaft gleich sein. Vorliegend bezieht sich die Dispersität insbesondere auf die Zusammensetzung und/oder die Durchmesser der Partikel.

Direkten Einfluss auf die Qualität der Elektrode hat neben der Verteilung der Partikeldurchmesser der mittlere Partikeldurchmesser. Vorzugsweise handelt es sich bei den Partikeln um Nanopartikel. Der mittlere Partikeldurchmesser ist möglichst klein und liegt vorzugsweise im Bereich von 50 bis 100 nm Ein bevorzugter maximaler Partikeldurchmesser ist materialabhängig und liegt im Bereich einer freien Diffusionslänge der Ladungsträger im Partikelmaterial, da dies eine hohe Lebensdauer $\tau$ der lichtangeregten Ladungsträger sicherstellt.

Die Lebensdauer, $\tau$ lichtangeregter Ladungsträger, d.h. die Zeitspanne, über die Elektron-Lochpaare getrennt existieren, gibt an, für welchen Zeitraum die Ladungsträger für die Elektrodenreaktion genutzt werden können, bevor sie (im Partikelvolumen) rekombinieren und damit nicht mehr für eine Reaktion an der Festkörper-Elektrolyt-Grenzfläche zur Verfügung stehen.

Analog zur Lebensdauer lässt sich der Qualität der Elektrode erfindungsgemäß auch durch die sog. (Minoritätsladungsträger-) Diffusionslänge, $L_p$, beschreiben, d.h. die Längenskala, über die sich die getrennten Ladungsträger bewegen können, bevor es zur Rekombination kommt. Ein mathematischer Zusammenhang zwischen diesen beiden Größen besteht unter Verwendung des sog. Diffusionskoeffizienten $D_p$, über: $L_p = (D_p\tau)^{1/2}$

In dem vereinfachten Gärtner-Modell kann mit diesen Materialkonstanten schließlich die zu erwartende Photostromdichte in Abhängigkeit von der Lichtintensität $I_0$, dem Lichtabsorptionskoeffizienten $\alpha$ sowie der (vom umgebenden Elektrolyten) abhängigen elektronischen Bandverbiegung im Material W vereinfacht dargestellt werden durch:

$$j_{photo} = -eI_0(1 - e^{-aW}/(1+\alpha L_p)).$$

Somit ist bevorzugt, dass die Partikel ein Material umfassen, welches eine besonders hohe Diffussionslänge $L_P$ der Minoritätsladungsträger aufweist.

Ferner ist die Dichte an elektronischen Defekten im Volumen der Partikel und/oder an deren Oberfläche bevorzugt möglichst gering, da diese die Rekombination der separierten Ladungsträger im Volumen beschleunigen und zu einer erhöhten Ladungsträgerrekombination an der Oberfläche führen.

In einer weiteren bevorzugten Ausgestaltung der Erfindung ist vorgesehen, dass die Halbleitermaterialien freie Ladungsträger aufweisen, wobei die Art der Ladungsträger, die eine Mehrheit (Majoritätsladungsträger) in dem Matrixmaterial darstellen, der Art der Ladungsträger entspricht, die sich infolge von Beleuchtung in den Partikeln bilden (Minoritätsladungsträger). In dieser Ausgestaltung ist ein Abtransport der lichtgenerierten Ladungsträger über das Matrixmaterial an die Elektrolytgrenzfläche optimiert.

Bei dem Matrixmaterial handelt es sich insbesondere um ein amorphes Material, welches die Partikel umgibt und einen Abtransport lichtgenerierter Ladungsträger zur Elektrolytgrenzfläche erlaubt. Die elektronische Struktur dieses Matrixmaterials ist vorzugsweise dadurch gekennzeichnet, dass die Minoritätsladungsträgerart innerhalb der Partikel (lichtangeregte Elektronen oder Löcher) mit der Majoritätsladungsträgerart im Matrixmaterial übereinstimmt. Das bedeutet beispielsweise, dass innerhalb der Partikel Löcher (sog. Defektelektronen) durch Licht angeregt werden und nach dem Transport zur Partikel-Matrix-Grenzfläche von dort aus durch einen Löcherstrom innerhalb des Matrixmaterials weitergeleitet werden, bis sie die Grenzfläche zum Elektrolyten erreichen. Da in diesem Beispiel angenommen wurde, dass die Löcher Majoritätsladungsträger im Matrixmaterial darstellen, also nicht lichtangeregt sind, ist die Rekombinationswahrscheinlichkeit innerhalb des Matrixmaterials sehr gering. Das genannte Beispiel wird, entsprechend einer Charakterisierung über die Dotierart, durch Kombination von n-dotierten Partikeln mit einem p-dotierten Matrixmaterial realisiert. Alternativ handelt es sich bei den Majoritätsladungsträgern des Matrixmaterials infolge Dotierung, sowie bei den Minoritätsladungsträgern, also den ausschließlich lichtangeregten Ladungsträgern, der Partikel um Elektronen.

Ferner ist bevorzugt, wenn die Kationen des Matrixmaterials die gleichen Elemente umfasst wie die Kationen des Materials der Partikel. Insbesondere bevorzugt umfasst das Matrixmaterial dabei Oxide beziehungsweise Keramiken zumindest einer Kationensorte der Partikelzusammensetzung.

Ferner ist bevorzugt, dass das Matrixmaterial neben dem amorphen Halbleitermaterial ein Grundmaterial umfasst, welches kohlenstoffreich und sowohl elektronisch als auch elektrochemisch inert ist. Der Kohlenstoffanteil liegt bevorzugt über 30 Gew-%, insbesondere über 45 Gew.-%, besonders bevorzugt über 50 Gew.-%. Derartiges Matrixmaterial dient unter anderem dem Schutz der photoaktiven Partikel die anderenfalls bei direktem Kontakt mit dem Elektrolyten durch Oxidations- und Reduktionsvorgänge amorphisiert werden würden und damit ihre Photoaktivität durch eine erhöhte Zahl an Rekombinationsprozessen verlieren oder zumindest stark reduzieren würden.

In einer weiter bevorzugten Ausgestaltung der erfindungsgemäßen Elektrode ist die katalytische Schicht als Mehrschichtsystem einer Mehrzahl von gleichartigen erfindungsgemäßen Schichten ausgebildet. Dies hat den Vorteil, dass die katalytische Schicht in einer definierten Schichtdicke sehr homogen ausgeführt ist, da gleichartige dünne Schichten aufgrund ihrer reduzierten Schichtdicke maximale Homogenität erreichen und die Aneinanderreihung zu einer dickeren Schicht definierter Schichtdicke zu einer Schicht mit ebenfalls maximaler Homogenität führt. Darüber hinaus wird durch die Anordnung heterogener Schichten zu einem Mehrschichtsystem eine katalytische Schicht erzielt, die beispielsweise über die Schichtdicke einen Gradienten in Bezug auf die Leitfähigkeit aufweist. Bevorzugt sind dabei 2 bis 10, insbesondere 2 bis 5 Schichten angeordnet.

Ein weiterer Aspekt der Erfindung betrifft eine Solarzelle, welche eine erfindungsgemäße Elektrode aufweist. Der Vorteil einer erfindungsgemäßen Solarzelle besteht insbesondere darin, dass die erfindungsgemäße Solarzelle günstiger in der Herstellung, langlebiger und vollständig aus ungiftigen Substanzen aufbaubar ist. Die Elektrode bildet in der erfindungsgemäßen Solarzelle das Absorbermaterial. An die Elektrode angeordnet ist ein, insbesondere fester, Ionenleiter.

Die Solarzelle weist ferner eine Gegenelektrode auf, die über den Ionenleiter elektrisch mit der erfindungsgemäßen Elektrode (Photoelektrode) verbunden ist. Die Gegenelektrode ist vorzugsweise flächig ausgeführt und derart der erfindungsgemäßen Elektrode gegenüber angeordnet, dass ein Schichtstapel aus erfindungsgemäßer photoelektrischer Elektrode (Absorbermaterial der Solarzelle)/Ionenleiter/Gegenelektrode entsteht. In dieser Ausgestaltung umfasst die Gegenelektrode bevorzugt ein für die aktiven Wellenlängen der photoelektrischen Elektrode (diejenigen, die in der Photoelektrode einen Photoeffekt auslösen) transparent und elektrisch leitfähiges Material (TCO). Der Vorteil dieser Ausgestaltung liegt insbesondere darin, dass aufgrund der großen Oberfläche und der parallelen Anordnung der Elektroden eine große Zahl generierter freier Ladungsträger abgefangen werden kann, ohne, dass diese eine große Weglänge im Ionenleiter zurücklegen und rekombinieren. Dies erhöht den Wirkungsgrad. Alternativ ist die Gegenelektrode als Stab- oder Plättchenelektrode ausgeführt. Der Vorteil dieser Ausgestaltung liegt darin, dass eine Abschattung vollständig verhindert werden kann. Zudem ist, je nach Material die Rekombinationsrate freier Ladungsträger aufgrund einer geringeren Oberfläche reduziert.

Werden in der Photoelektrode infolge von Bestrahlung durch einen Photoeffekt Ladungsträger generiert, werden diese separiert und über den Ionenleiter zur Gegenelektrode geleitet um in einen externen Stromkreislauf gespeist zu werden.

Ein weiterer Aspekt der Erfindung betrifft ein Verfahren zum Herstellen, insbesondere oben beschriebener, Elektrode zur photoelektrischen Katalyse. Erfindungsgemäß umfasst das Verfahren zumindest die folgenden Schritte:

    a: Bereitstellen einer Suspension aus Partikeln in einem Lösungsmittel und in Kontaktbringen der Suspension mit einer Trägerschicht,
    b: Anlegen eines Spannungspulses zwischen Trägerschicht und Suspension zum Abscheiden einer Schicht Partikel auf der Trägerschicht, und
    c: Reduktion des Durchmessers der suspendierten Partikel,
    wobei Schritt b wiederholt wird.

Die Funktionsweise des erfindungsgemäßen Verfahrens besteht insbesondere darin, dass nur für die Dauer eines kurzen Spannungspulses nur für diese kurze Zeitspanne eine Migration geladener Partikel zur Oberfläche initiiert wird. Aufgrund von Strömungswiderständen ist es nur den kleinsten Teilchen möglich innerhalb des Spannungspulses die Oberfläche zu erreichen und sich abzuscheiden. Partikel, die einen Partikeldurchmesser oberhalb eines bestimmten Werts aufweisen bleiben in Suspension und werden nicht abgeschieden. Das Ätzen der Partikel wiederum erzeugt durch die Verkleinerung der Partikel erneut kleine Partikel, welche in einem folgenden Spannungspuls abgeschieden werden. Somit wird eine sehr homogene Schicht abgeschieden, deren abgeschiedene Partikel einen bestimmten Durchmesser nicht überschreiten, ohne dass es Voraussetzung ist, derartig homogen verteilte Partikel bereits als Suspension zur Verfügung zu stellen.

Das erfindungsgemäße Verfahren zeigt den Vorteil, dass zum einen der Partikeldurchmesser gegenüber dem Ausgangsmaterial stark verkleinert wird, um die sog.

Volumenrekombinationsrate der lichtgenerierten Ladungsträger zu senken und ferner dass im Vergleich zu herkömmlichen Verfahren der Aufwand und die Kosten für die Bereitstellung der Partikel erheblich reduziert ist, da die Ansprüche an die Qualität der Partikel weniger hoch ist, wie in herkömmlichen Verfahren. So können bei erfindungsgemäßem Verfahren Partikel mit einer großen Varianz des Partikeldurchmessers verwendet werden, da diese in Schritt c, reduziert werden. Zudem wird die Qualität der Partikeloberfläche in Schritt c optimiert, in dem die Defektdichte an der Oberfläche reduziert wird. Durch das Abscheiden der kleinen Partikel in Schritt b wird erreicht, dass nur Partikel, die zu einer qualitativ hochwertigen katalytischen Schicht führen, auf dem Trägermaterial abgeschieden werden.

In Bezug auf die Kosten führt die Verwendung von industriell produzierten und kommerziell erhältlichen Partikeln zu einer deutlichen Reduktion, da kostengünstige Partikel niedriger Qualität als Edukte für die Abscheidung verwendet werden können. Gleichzeitig wird die Qualität der Elektrode erhöht, das heißt die erzielbare Photospannung und Photostromdichten maximiert. Von besonderer Bedeutung ist hierbei, dass aus Partikeln von üblicherweise niedriger Qualität (im Vergleich zu solchen Materialien, die zu Forschungszwecken im Laborbereich hergestellt werden) Elektroden hergestellt werden können, die zunächst lediglich erkennbare Photoaktivität zeigen und - in einem nachgeordneten Optimierungsschritt - eine Effizienz erzielen, die von technisch-industrieller Anwendungsrelevanz ist. Üblicherweise sind darunter photoelektrokatalytische Stromdichten von etwa 10 mAcm$^{-2}$ unter AM1.5 Beleuchtungs-Bedingungen direkt am thermodynamischen Potential der betrachteten Reaktion zu zählen.

Erfindungsgemäß wird ein Verfahren zur Erzeugung eines Heterosystems vorgeschlagen, durch das, vorzugsweise kristalline, Pigmentpartikel mit einem mittleren Durchmesser in der Größenordnung der materialspezifischen Diffusionslänge oder darunter in eine amorphe leitfähige (z. B. oxidische) Matrix zumindest teilweise, bevorzugt vollständig, eingebettet werden. Das Matrixmaterial wird dabei vorzugsweise aus den Partikeln gewonnen. Durch eine mehrstufige, kombinierte Prozessierung, die einen elektrophoretischen Partikeltransport und eine simultane Bildung eines amorphen Matrixmaterials beinhaltet, wird eine heterogene Struktur der Elektrode erzielt. Dabei findet die Prozessierung bevorzugt zwei bis zehn-stufig, vorzugsweise zwei- bis fünf-stufig statt, das heißt der Schritt b und/oder Schritt c wird zwei bis zehn, bevorzugt zwei bis fünf- mal wiederholt.

In Schritt a werden gemäß erfindungsgemäßem Verfahren abzuscheidende Partikel in einem geeigneten Lösungsmittel suspendiert. Unter geeignet ist ein Lösungsmittel zu verstehen, welches die Partikel nicht löst, vorzugsweise jedoch im Sinne einer Suspension eine Kohäsion der Partikel verhindert. Je nach gewähltem Partikelmaterial sind dies bevorzugt protische Lösungsmittel. Die suspendierten Partikel weisen eine polarisierte oder ionisierte Oberfläche auf. Ferner umfasst Schritt a das Inkontaktbringen des Trägermaterials mit der Suspension, darunter wird zum Beispiel Tauchen des Trägermaterials in die Suspension, aber Aufbringen der Suspension auf das Trägermaterial verstanden. Das Trägermaterial umfasst dabei eine Oberfläche, auf der die Partikel im Zuge des Verfahrens abgeschieden werden.

Die Polarisierung beziehungsweise Ionisierung der Oberfläche der Partikel erfolgt bevorzugt durch Zugabe eines chemischen Zusatzstoffes. Bevorzugt wird die Ladung der Partikeloberfläche durch Zugabe eines Oxidations- oder Reduktionsmittels zur Suspension festgelegt. Ein bevorzugtes Reagens ist beispielsweise Iod.

Der sich anschließende Schritt b umfasst das Anlegen eines Spannungspulses, das heißt das Anlegen einer Spannung in einer vorbestimmten Höhe für einen vorbestimmten, insbesondere kurzen, Zeitraum. Unter kurz werden vorliegend Zeitspannen von einigen Sekunden bis wenigen Minuten verstanden. Zwischen zwei Spannungspulsen liegt keine oder eine im Vergleich zum Spannungspuls niedrige Spannung an.

Die Spannung ist derart gepolt, dass ein elektrisches Feld induziert wird, welches bewirkt, dass die Partikel aufgrund ihrer polarisierten oder ionisierten Oberfläche während des Spannungspulses innerhalb der Suspension zur Oberfläche des Trägermaterials migrieren. Je nach Ladung der Partikeloberfläche wird die Spannung derart angelegt, dass das Trägermaterial ein positiver oder negativer elektrische Pol ist. Die Migrationsgeschwindigkeit wird insbesondere durch die Viskosität des Lösungsmittels sowie den Partikeldurchmesser bestimmt, Partikel mit einem geringeren Durchmesser weisen eine höhere Migrationsgeschwindigkeit auf als solche mit einem größeren Partikeldurchmesser beziehungsweise einer größeren Partikeloberfläche. Nach Ende des Spannungspulses wird die Migration der Partikel unterbrochen, nachdem lediglich ein Teil der suspendierten Partikel, nämlich solche mit kleinerem Durchmesser beziehungsweise der kleineren Oberfläche, die Oberfläche des Trägermaterials erreicht haben und sich dort abscheiden.

Die Dauer des Spannungspulses hat somit einen Einfluss auf die je Spanungspuls abgeschiedene Schichtdicke und Schichtzusammensetzung, sowie insbesondere den maximalen Partikeldurchmesser innerhalb der abgeschiedenen Schicht.

In einer bevorzugten Ausgestaltung des erfindungsgemäßen Verfahrens ist vorgesehen, dass der Spannungspuls für eine Zeitdauer von 10 Sekunden bis 5 Minuten, vorzugsweise von 1 bis 3 Minuten, insbesondere von 1 bis 2 Minuten, angelegt wird. Innerhalb der bevorzugten Zeitspannen weist die abgeschiedene Schicht eine große Homogenität der Partikelgröße auf. Ferner ist innerhalb dieser Zeitspannen sichergestellt, dass die abgeschiedenen Partikel einen Durchmesser aufweisen, der kleiner oder gleich der Diffusionslänge $L_P$ der Ladungsträger innerhalb des Partikelmaterials ist. Wie oben beschrieben weisen Elektroden mit derartigen Schichten eine besonders hohe Qualität auf.

In Schritt c des erfindungsgemäßen Verfahrens findet eine Reduktion des Partikeldurchmessers statt. In einer bevorzugten Ausgestaltung findet diese Reduktion durch chemisches Ätzen statt. Dazu wird zu Beginn des Verfahrens und/oder während des Verfahrens, dann bevorzugt zwischen den Spannungspulsen, ein chemisches Ätzmittel der Suspension zugegeben. Das chemische Ätzmittel zeichnet sich dadurch aus, dass es grundsätzlich das Partikelmaterial zu lösen vermag, dies aber in einer Geschwindigkeit geschieht, dass während des Verfahrens lediglich in Teil der Partikel, insbesondere ein Teil der einzelnen Partikel in Lösung geht.

Vorzugsweise werden der Suspension zum Zwecke des Ätzens Laugen oder Basen beigemischt. Alternativ oder zusätzlich können aber auch andere Reagenzien wie beispielsweise Oxidations- und Reduktionsmittel zugegeben werden, die das Partikelmaterial in Substanzen überführen, welche dann im Lösungsmittel löslich sind. Letztere dissoziieren im, vorzugsweise protischen, Lösungsmittel. Beispielsweise führt die Zugabe von Iod zur Suspension zunächst zu einer geladenen Partikeloberfläche. Überschüssiges Iod bildet im protischen Lösungsmitte Iodwasserstoffsäure (HI), welche dann im weitern Verlauf der Reaktion als Ätzmittel fungiert.

Das Durchmesserreduzieren der Partikel kann zusätzlich zu Schritt c auch während der Spannungspulse stattfinden, also im Wesentlichen kontinuierlich. Dies wird zum Beispiel dadurch realisiert, dass ein chemisches Ätzmittel während des gesamten Verfahrens ini der Suspension anwesend ist.

Bei der Durchmesserreduzierung der Partikel geht ein Teil der Oberfläche der Partikel in Lösung. Dadurch findet zum einen eine Reduktion der Partikeldurchmesser statt. Zum anderen ist die in Lösung gegangene Substanz befähigt, weitere Verbindungen, wie Oxide einzugehen, und sich als Matrixmaterial ebenfalls auf der Oberfläche abzuscheiden. Diese Abscheidung erfolgt simultan mit der Abscheidung der Partikel und kann gegebenenfalls zusätzlich in den Pulspausen erfolgen.

Mit besonderem Vorteil gehen in Schritt c des erfindungsgemäßen Verfahrens die Partikel teilweise in Lösung und es scheidet sich in Schritt b das in Lösung befindliche Material als Matrixmaterial gleichzeitig mit den Partikeln ab. Daraus ergibt sich der Vorteil, dass das Matrixmaterial im Gegensatz zu einer Abscheidung in den Pulspausen, nicht in einer separaten, zu einer Schicht aus Partikeln benachbarten, Schicht abgeschieden wird und somit kein heterogener Schichtstapel entsteht. Vielmehr findet eine Durchmischung statt, so dass zumindest ein Teil der Partikel von Matrixmaterial umschlossen ist und die Partikel vorzugsweise in das Matrixmaterial eingebettet sind.

In weiteren Ausgestaltungen ist bevorzugt, dass der Suspension weitere Substanzen zugesetzt werden, die die elektrochemischen Eigenschaften des Matrixmaterials positiv beeinflussen. Hierunter sind insbesondere solche Substanzen zu verstehen, die das Matrixmaterial gegebenenfalls derart dotieren, dass die Art der Majoritätsladungsträger des Matrixmaterials der Art der Minoritätsladungsträger der Partikel entspricht. Geeignete Zusätze sind beispielsweise Metallhalogenide, insbesondere Metallchloride.

Weitere bevorzugte Ausgestaltungen der Erfindung ergeben sich aus den übrigen, in den Unteransprüchen genannten Merkmalen.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:

Figur 1   eine schematische Schnittansicht einer Elektrode zur photoelektrischen Katalyse nach dem Stand der Technik (I), sowie in einer bevorzugten Ausgestaltung der Erfindung (II),

Figur 2   eine schematische Darstellung des erfindungsgemäßen Verfahrens in einer bevorzugten Ausgestaltung,

Figur 3   die graphische Darstellung der Photostromdichten einer Elektrode nach dem Stand der Technik sowie einer erfindungsgemäßen Elektrode im Vergleich und

Figur 4   EDX-Aufnahmen einer mit dem erfindungsgemäßen Verfahren hergestellten Elektrode in zwei Auflösungen.

Figur 1 zeigt die schematische Querschnittzeichnung einer Elektrode 10' nach dem Stand der Technik (Teildarstellung I) im Vergleich zu einer erfindungsgemäßen Elektrode 10 (Teildarstellung II). Beide Elektroden 10, 10' weisen eine Trägerschicht 1 auf, auf dem eine katalytische Schicht 2 abgeschieden ist, die ihrerseits photoaktive Partikel 3 umfasst. Die Elektroden 10, 10' sind beispielsweise mittels elektrophoretischer Abscheidung (EPD) darstellbar.

Die Struktur der Elektrode 10', wie sie typischerweise aus elektrophoretischer Abscheidung von Partikeln 3 mit einer großen Durchmesserverteilung erhalten wird, weist in der katalytischen Schicht 2 sowohl kleinere Partikel 3a als auch größere Partikel 3b auf. Entsprechend der jeweiligen Mobilität der Partikel 3 während der Abscheidung in der Lösung, werden kleinste Partikel 3a am schnellsten, größere Partikel 3b am langsamsten abgeschieden. Aus diesem Grund sind kleinere Partikel 3a näher an der Trägerschicht 1 angeordnet als die größeren Partikel 3b.

Teilabbildung II der Figur 1 zeigt die Struktur der erfindungsgemäße Elektrode 10, bei der kleine Partikel 3a (Durchmesser < Diffusionslänge) monodispers in mehreren Schichten 5 auf der Trägerschicht 1 angeordnet sind, während eine einbettende (amorphe) Matrix 4, die ein amorphes elektronisch und elektrochemisch inertes Grundmaterial 4b sowie ein amorphes Halbleitermaterial 4a umfasst, den Abtransport lichtgenerierter Ladungsträger hin zur Elektrolytgrenzfläche gestattet. Das inerte Grundmaterial 4b ist besonders kohlenstoffreich (Kohlenstoffanteil größer als 30 %wt, insbesondere größer als 50%wt), während das Halbleitermaterial 4a, beispielsweise ein Metalloxid, bei einem Kohlenstoffanteil von weniger als 30 %wt, insbesondere weniger als 20 %wt ein Kation aufweist, welches einem Kation der photoaktiven Partikel 3a entspricht. Hierbei ist unerheblich, ob die Kationen der Partikel 3a und die des Halbleitermaterials 4a der Matrix die gleiche Oxidationsstufe aufweisen.

Bei der erfindungsgemäßen Elektrode werden in den Partikeln 3a Ladungsträger generiert, welche sich von dort ausgehend innerhalb der des Halbleitermaterials 4a der Matrix 4 über einen sogenannten hopping-Mechanismus durch die Matrix 4 bewegen. Das inerte Grundmaterial 4b stellt für die Ladungsträger eine hochohmige Barriere dar, die sie nur mittels Tunneleffekt überwinden können. Um dennoch eine gute Leitung zu realisieren ist die Ausdehnung des Grundmaterials 4b beziehungsweise der Abstand elektrisch leitender bzw. halbleitender Partikel 3a, 4a möglichst gering, vorzugsweise im Bereich von 1 bis 5 nm.

Eine erfindungsgemäße photoelektrische Elektrode zur photoelektrischen Katalyse nutzt einen gekoppelten Elektronen- und Ionentransport zur katalytischen Energieumwandlung. Hierbei übernimmt der Elektrolyt die Rolle des Ionenleiters. In diesem Elektrolyten finden z.T. irreversible chemische Prozesse statt wie etwa die Spaltung von $H_2O$ in $H_2$ und $O_2$. Dieselbe Elektrode kann nun in einer vergleichbaren Anordnung betrieben werden, bei der der Elektrolyte, der ja nicht Erfindungsgenstand ist, gegen einen solchen ausgetauscht wird, der ein sog. Redoxpaar wie etwa Iodid/Triiodid enthält. Die dadurch realisierte Anordnung wandelt Lichtenergie in eine Photospannung und in einen Photostrom unter reversiblen Bedingungen um ($I^- \rightarrow I_3^-$ und $I_3^- \rightarrow I^-$), ohne den Elektrolyten zu verbrauchen. Es handelt sich dann um eine photoelektrochemische Solarzelle. In einer weiteren Ausgestaltung kann der Elektrolyt vollständig durch einen Elektronenleiter ersetzt werden, der die Elektrode mit der Gegenelektrode verbindet. Dies kann durch direkte Kontaktierung der Oberfläche mit einem elektrisch leitfähigen, insbesondere metallischem, Material geschehen und/oder durch Abscheidung eines transparenten leitfähigen Oxids (engl. transparent conductive oxide, TCO), welches vorzugsweise seinerseits durch metallische Kontakte mit der Gegenelektrode verbunden wird. Durch diese Anordnung wird eine Festkörper-Solarzelle realisiert, bei der die benötigte Photospannung und der Photostrom in den als Katalysatorpartikeln bezeichneten Strukturen erzeugt werden.

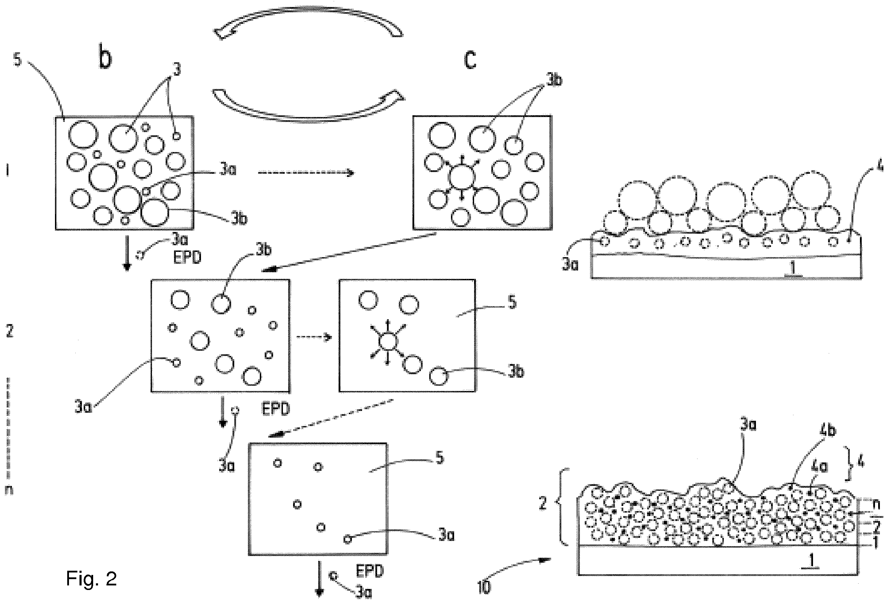

Figur 2 zeigt schematisch das erfindungsgemäße Verfahren in einer n-stufigen elektrophoretischen Abscheidung von kommerziell erhältlichen Partikeln 3 mit einer großen Durchmesserverteilung. Zunächst werden die in Bezug auf den Partikeldurchmesser stark variierenden Partikel 3 in einem Lösungsmittel 5 suspendiert (nicht gezeigt). Die Suspension wird mit einer Trägerschicht 1 in Kontakt gebracht. Dies kann sowohl vor, als auch nach der Suspendierung geschehen. Anschließend beginnt der Abscheideprozess, welcher grundsätzlich in zwei Schritten (b, c) erfolgt, welche so häufig wiederholt werden, bis die gewünschte Schichtdicke der katalytischen Schicht 2 erreicht ist.

Bei der hier erfindungsgemäßen mehrstufigen Abscheidung realisiert das zwischenzeitliche Ätzen der Partikel (c) sowie kurze elektrophoretische Abscheidungsphasen (b) eine homogene Größenverteilung auf dem Trägermaterial 1, während die Reaktionsprodukte des Ätzprozesses eine einbettende Struktur des Matrixmaterials 4 ermöglichen. Im Einzelfall kann unter Zugabe weiterer Additive die chemische Zusammensetzung des Matrixmaterials sowie ihre elektronischen Eigenschaften geeignet abgeändert werden, so dass für den Ladungstransport günstige Leitfähigkeitseigenschaften sowie Grenzflächenbandverbiegungen realisiert werden können.

Im Detail heißt das in einer bevorzugten Ausgestaltung:

1) Pigmentpartikel werden in einem Lösungsmittel suspendiert, das für eine elektrophoretische Abscheidung geeignet ist (z. B. Aceton oder Acetonitril). Die Oberflächenladung der Partikel 3 wird durch Zugabe eines geeigneten Reduktions- oder Oxidationsmittles (z. B. Iod) festgelegt, so dass ein einheitlicher Transport zur Trägerschicht 1 mit der entgegengesetzten Ladung gewährleistet wird. Über einen kurzen Spannungspuls werden ausschließlich die kleinsten Partikel 3a (mit Durchmessern kleiner als die Diffusionslänge, sofern bereits in der Suspension vorhanden), auf dem Trägermaterial elektrophoretisch abgeschieden. Dieser Effekt wird dadurch realisiert, dass größere Partikel (mit einem größeren Durchmesser) aufgrund des höheren Widerstands in der viskosen Lösung längere Transportzeiten benötigen (der Widerstand nimmt quadratisch mit dem Durchmesser zu).

2) Durch Zugabe eines chemischen Ätzmittels werden nachfolgend die Partikeldurchmesser reduziert, indem oberflächennahe Bereiche der Partikel 3a in Lösung gehen (hier durch kleine Pfeile verdeutlicht). Gleichzeitig wird durch das Ätzen (c) eine Partikeloberfläche realisiert, die eine geringere Dichte an Oberflächenzuständen aufweist. Im allgemeinen sind hierzu Säuren oder Laugen geeignet. Bei Verwendung von Iod kann aber auch das protische, d.h. protonenspendende Ethanol hinzugegeben werden, um eine saure und damit leicht ätzende Wirkung zu erzielen. Im Zuge dieses Ätzens (c) wird Material der Partikel 3 in die Suspension abgegeben. Ein nachfolgender Spannungspuls transportiert wiederum die kleinsten Partikel 3a zur Trägerschicht 1. Simultan wird elektrochemisch auf der Elektrode die Matrix 4 gebildet, die sich, im Zuge des Ätzens, aus den chemischen Komponenten der in Lösung übergegangenen Reaktionsprodukte zusammensetzt. Diese Matrixmaterial 4 weist i.a. eine amorphe Struktur auf. Gegebenenfalls können weitere chemische Zusätze (z.B. Metallchloride) dazu dienen, die elektronischen Eigenschaften des Matrixmaterials 4 abzuändern.

3) Schritte 1 und 2 werden so lange wiederholt, bis die gewünschte Filmdicke auf der Elektrode realisiert ist. Kommt es vor dem Erreichen der Filmdicke zu einer Erschöpfung der Jodkonzentration, wird vorzugsweise neuerlich Jod zur Suspension gegeben. Diese Erschöpfung der Jodkonzentration kann alternativ oder zusätzlich als Indikator und/oder Regulator für die Abscheidung dienen. Über die Filmdicke wird das Gesamt-Lichtabsorptionsverhalten und somit die Rate von einfallendem Licht zu generierten Ladungsträgern bestimmt (sog. incident photon to charge carrier efficiency, IPCE).

Ausführungsbeispiel

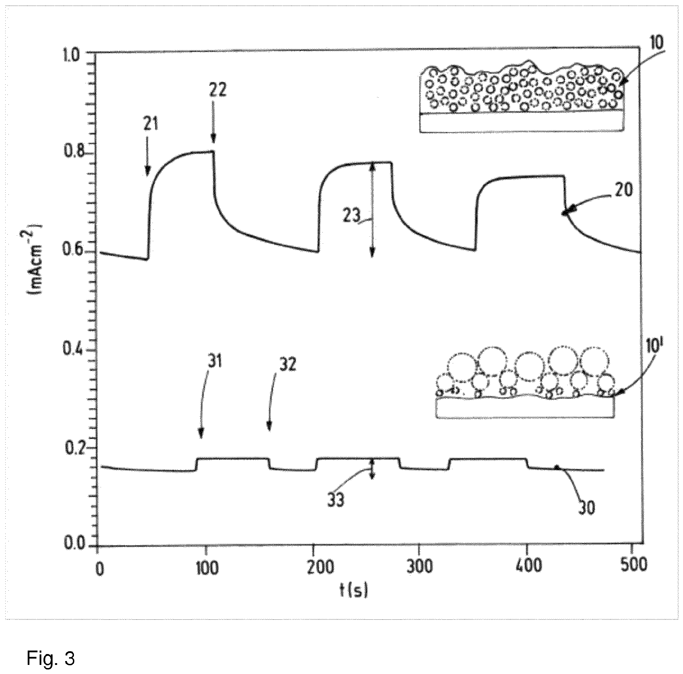

Es wurden Bismutvanadat Pigmente (BiVO$_4$) (Firma Bruchsaler-Farben GmbH) werden verwendet. Die gelblichen Pigmente (35 mg) wurden gemäß Schritt a des erfindungsgemäßen Verfahrens in einer Aceton (10 ml) / Iod (40 mg) Lösung in einem Ultraschallbad (37 kHz) für 10 Minuten suspendiert. Anschließend wurde die Suspension zur elektrophoretischen Abscheidung auf einem Träger (fluoriertes Zinnoxid FTO) mit dreimaliger Wiederholung für jeweils 1 Minute und 40 Sekunden elektrophoretisch abgeschieden. Zwischen den einzelnen Abscheidungen wurde die Suspension erneut ins Ultraschallbad gestellt. Da das hinzugefügte Iod zusammen mit Restwasser in der Aceton-Lösung Iodwasserstoffsäure bildet, wird eine stärkere Teilauflösung der oxidischen Partikel und somit eine Größenreduktion erzielt. Die resultierende Oberflächenmorphologie wurde mittels EDX nach erstmaliger und letztmaliger Abscheidung ermittelt (Figur 3) und entspricht der schematisch in Figur 1 II gezeigten Elektrode 10.

In dem hier gewählten Beispiel handelt es sich bei dem abgeschiedenen Matrixmaterial 4 überwiegend um amorphes Vanadiumoxid (V$_x$O$_y$), welches die Partikel 3 aus BiVO$_4$ einbettet.

In Figur 3 ist vergleichend das Verhalten der beiden Elektroden 10, 10' bei konstantem Potential (1.2 V) und ein- bzw. ausgeschaltetem Licht (ca. 50 mWcm$^{-2}$) gezeigt. Mit den Bezugszeichen 21 und 22 sind die Zeitpunkte des Einschaltens beziehungsweise Ausschaltens des Lichts gekennzeichnet. Während die Elektrode 10' nach dem Stand der Technik (herstellbar beispielsweise durch einmaliges elektrophoretisches Abscheiden einer Lösung bis zur gewünschten Schichtdicke) nur Photostromdichten von etwa 20 μAcm$^{-2}$ während der Lichtpulse aufweist, erzielt die erfindungsgemäße Elektrode 10 Photostromdichten von bis zu 200 μAcm$^{-2}$. Die Ergebnisse wurden während der photoelektrochemischen Erzeugung von Sauerstoff in einem 0.1M NaOH Elektrolyten bestimmt. Gezeigt ist die Photostromantwort der beiden Vergleichselektroden 10, 10' in einem 0.1M NaOH Elektrolyten. Als Potential wurde 1.2 V gegenüber einer Ag/AgCl Referenzelektrode gewählt.

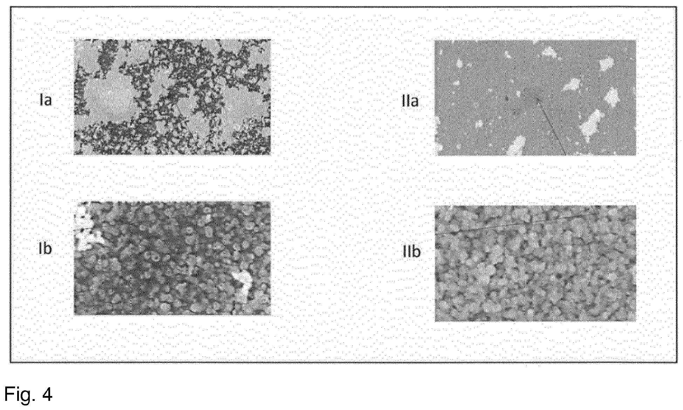

Figur 4 zeigt EDX-Aufnahmen der katalytischen Schicht an der Grenze des Matrixmaterials nach Stufe 1 (I) und an der gleichen Stelle, im Matrixmaterial nach Ablauf des in Figur 3 dargestellten erfindungsgemäßem Verfahren (II). In der Übersicht (Ia) ist eine (dünnere) Grenzfläche zu erkennen, die von größeren Partikeln bzw. Partikelagglomeraten teilbedeckt ist. Die amorphe Phase in Ib zeigt kaum eingebettete kleinere Partikel. Im Gegensatz dazu zeigt die Übersicht IIa der EDX-Aufnahme nach Abschluss des Verfahrens (II) eine Abnahme abgeschiedener größerer Partikel bzw. Agglomerate. Die Detailansicht IIb zeigt eine nanopartikuläre Heteroschicht aus kleinen Einzelbestandteilen, umgeben von einer amorphen Phase. In IIb deutlich zu erkennen ist eine nanopartikuläre Heteroschicht aus kleinen (nicht kristallinen) Einzelbestandteilen, welche von einer amorphen Phase umgeben sind. Dabei bilden die nanopartikulären nicht kristallinen Bestandteile gemeinsam mit der amorphen Phase das Matrixmaterial.

Patentansprüche

1. Elektrode (10) zur photoelektrischen Katalyse, umfassend eine Trägerschicht (1), auf der eine katalytische Schicht (2) angeordnet ist, die Partikel (3) aus einem ersten Halbleitermaterial umfasst, wobei die katalytische Schicht (2) ferner eine Matrix (4) aus einem amorphen zweiten Halbleitermaterial aufweist, welche die Partikel zumindest teilweise umhüllt, **dadurch gekennzeichnet, dass** zumindest 90% der Partikel (3) eine Abweichung von einem mittleren Partikeldurchmesser von höchstens 20% aufweisen.

2. Elektrode (10) zur photoelektrischen Katalyse nach Anspruch 1, **dadurch gekennzeichnet, dass** zumindest 90% der Partikel (3) eine Abweichung von einem mittleren Partikeldurchmesser von höchstens 10% aufweisen.

3. Elektrode (10) zur photoelektrischen Katalyse nach einem der vorhergehenden Ansprüche, **dadurch gekennzeichnet, dass** die Halbleitermaterialien freie Ladungsträger aufweisen, wobei die Art der Ladungsträger, die eine Majorität in dem Matrixmaterial darstellen, der Art der Ladungsträger entspricht, die sich infolge von Beleuchtung in den Partikeln (3) bilden.

4. Elektrode (10) zur photoelektrischen Katalyse nach einem der vorhergehenden Ansprüche, **dadurch gekennzeichnet, dass** die katalytische Schicht (2) als Mehrschichtsystem ausgebildet ist.

5. Elektrode(10) zur photoelektrischen Katalyse nach einem der vorhergehenden Ansprüche, **dadurch gekennzeichnet, dass** die Elektrode eine photoelektrochemische oder eine photovoltaische Elektrode ist.

6. Elektrode(10) zur photoelektrischen Katalyse nach einem der vorhergehenden Ansprüche, **dadurch gekennzeichnet, dass** an die Elektrode ein Ionenleiter, also ein Elektrolyt oder ein Elektronenleiter, angeordnet ist.

7. Solarzelle aufweisend eine Elektrode zur photoelektrischen Katalyse nach einem der vorhergehenden Ansprüche sowie einen Ionenleiter, also einen Elektrolyten oder einen Elektronenleiter.

8. Solarzelle nach Anspruch 7, **dadurch gekennzeichnet, dass** die Solarzelle ferner eine, insbesondere transparente, Gegenelektrode umfasst und die Elektrode zur photoelektrischen Katalyse über den Ionenleiter mit der Gegenelektrode elektrischleitend verbunden ist.

9. Verfahren zum Herstellen einer Elektrode (10) zur photoelektrischen Katalyse, umfassend folgende Schritte:

a: Bereitstellen einer Suspension aus Partikeln (3) in einem Lösungsmittel (5) und Inkontaktbringen der Suspension mit einer Trägerschicht (1),

b: Anlegen eines Spannungspulses zwischen Trägerschicht (1) und Suspension zum Abscheiden einer Schicht Partikel (3) auf der Trägerschicht (1), und

c: Reduktion des Durchmessers der suspendierten Partikel (3) und, einmaliges wiederholen des Schritts (b) oder mehrfaches Wiederholen der Schritte (b) und (c).

10. Verfahren nach Anspruch 9, **dadurch gekennzeichnet, dass** der Spannungspuls für eine Zeitdauer im Bereich von 10 Sekunden bis 5 Minuten angelegt wird.

11. Verfahren nach einem der Ansprüche 9 bis 10, **dadurch gekennzeichnet, dass** das Reduzieren des Partikeldurchmessers durch chemisches Ätzens erfolgt.

12. Verfahren nach einem der Ansprüche 9 und 10, **dadurch gekennzeichnet, dass** während Schritt (c) des Verfahrens zwischen Trägerschicht (1) und Suspension keine oder eine geringere Spannung als in Schritt (b) anliegt.

13. Verfahren nach einem der Ansprüche 9 bis 12, **dadurch gekennzeichnet, dass** durch Zugabe eines Oxidations- oder Reduktionsmittels zur Suspension eine Oberflächenladung der Partikel (3) festgelegt wird.

14. Verfahren nach einem der Ansprüche 9 bis 13, **dadurch gekennzeichnet, dass** in Schritt (c) die Partikel (3) teilweise in Lösung gehen und sich in Schritt (b) das in Lösung befindliche Partikelmaterial gleichzeitig mit den Partikeln (3) als Matrix (4) abscheidet.

**Claims**

1. An electrode (10) for photoelectric catalysis, comprising a substrate layer (1), on which a catalytic layer (2) is arranged which comprises particles (3) of a first semiconductor material, wherein the catalytic layer (2) further comprises a matrix (4) of an amorphous second semiconductor material which at least partly envelops the particles, **characterized in that** at least 90% of the particles (3) deviate from an average particle diameter by at most 20%.

2. The electrode (10) for photoelectric catalysis according to Claim 1, **characterized in that** at least 90% of the particles (3) deviate from an average particle diameter by at most 10%.

3. The electrode (10) for photoelectric catalysis according to any one of the preceding claims, **character-**

**ized in that** the semiconductor materials have free charge carriers, wherein the type of charge carriers which are a majority in the matrix material corresponds to the type of charge carriers which form in the particles (3) as a result of illumination.

4. The electrode (10) for photoelectric catalysis according to any one of the preceding claims, **characterized in that** the catalytic layer (2) is formed as a multilayer system.

5. The electrode (10) for photoelectric catalysis according to any one of the preceding claims, **characterized in that** the electrode is a photoelectrochemical or photovoltaic electrode.

6. The electrode (10) for photoelectric catalysis according to any one of the preceding claims, **characterized in that** an ion conductor, i.e. an electrolyte or an electron conductor, is arranged on the electrode.

7. A solar cell having an electrode for photoelectric catalysis according to any one of the preceding claims and an ion conductor, i.e. an electrolyte or an electron conductor.

8. The solar cell according to Claim 7, **characterized in that** the solar cell further comprises an, in particular transparent, counter-electrode and the electrode for photoelectric catalysis is connected electrically conductively with the counter-electrode via the ion conductor.

9. A method for manufacturing an electrode (10) for photoelectric catalysis, comprising the following steps:

   a: providing a suspension of particles (3) in a solvent (5) and bringing the suspension into contact with a substrate layer (1),
   b: applying a voltage pulse between the substrate layer (1) and the suspension to deposit a layer of particles (3) on the substrate layer (1), and
   c: reducing the diameter of the suspended particles (3) and,
   repeating the step (b) once again or repeating steps (b) and (c) multiple times.

10. The method according to Claim 9, **characterized in that** the voltage pulse is applied for a period in the range of from 10 seconds to 5 minutes.

11. The method according to either one of Claims 9 to 10, **characterized in that** the particle diameter is reduced by chemical etching.

12. The method according to either one of Claims 9 and 10, **characterized in that** during step (c) of the method no voltage or a lower voltage than in step b) is applied between the substrate layer (1) and the suspension.

13. The method according to any one of Claims 9 to 12, **characterized in that** a surface charge of the particles (3) is established by adding an oxidation or reducing agent to the suspension.

14. The method according to any one of Claims 9 to 13, **characterized in that** in step (c) the particles (3) pass partly into solution and in step (b) the particulate material in solution is deposited at the same time as the particles (3) as a matrix (4).

**Revendications**

1. Électrode (10) de catalyse photoélectrique, comprenant une couche support (1) sur laquelle une couche catalytique (2) est disposée, laquelle comprend des particules (3) d'un premier matériau semi-conducteur, la couche catalytique (2) présentant en outre une matrice (4) dans un deuxième matériau semi-conducteur amorphe, laquelle entoure au moins partiellement les particules, **caractérisée en ce qu'au** moins 90 % des particules (3) présentent un écart de 20 % au maximum par rapport à un diamètre de particule moyen.

2. Électrode (10) de catalyse photoélectrique selon la revendication 1, **caractérisée en ce qu'au** moins 90 % des particules (3) présentent un écart de 10 % au maximum par rapport à un diamètre de particule moyen.

3. Électrode (10) de catalyse photoélectrique selon l'une quelconque des revendications précédentes, **caractérisée en ce que** les matériaux semiconducteurs présentent des porteurs de charge libres, le type des porteurs de charge représentant une majorité dans le matériau de matrice correspondant au type des porteurs de charge qui se forment dans les particules (3) suite à un éclairage.

4. Électrode (10) de catalyse photoélectrique selon l'une quelconque des revendications précédentes, **caractérisée en ce que** la couche catalytique (2) est formée comme un système multicouche.

5. Électrode (10) de catalyse photoélectrique selon l'une quelconque des revendications précédentes, **caractérisée en ce que** l'électrode est une électrode photoélectrochimique ou une électrode photovoltaïque.

6. Électrode (10) de catalyse photoélectrique selon l'une quelconque des revendications précédentes, **caractérisée en ce qu'**un conducteur d'ions, c'est-à-dire un électrolyte ou un conducteur d'électrons, est disposé sur l'électrode.

7. Cellule solaire présentant une électrode de catalyse photoélectrique selon l'une quelconque des revendications précédentes ainsi qu'un conducteur d'ions, c'est-à-dire un électrolyte ou un conducteur d'électrons.

8. Cellule solaire selon la revendication 7, **caractérisée en ce que** la cellule solaire comprend en outre une contre-électrode, en particulier transparente, et l'électrode de catalyse photoélectrique étant connectée de façon électriquement conductrice à la contre-électrode par le conducteur d'ions.

9. Procédé pour la fabrication d'une électrode (10) de catalyse photoélectrique, comprenant les étapes suivantes :

   a : mise à disposition d'une suspension de particules (3) dans un solvant (5) et mise en contact de la suspension avec une couche support (1),
   b : application d'une impulsion de tension entre la couche support (1) et la suspension pour le dépôt d'une couche de particules (3) sur la couche support (1), et
   c : réduction du diamètre des particules suspendues (3), et
   répétition unique de l'étape (b) ou répétition multiple des étapes (b) et (c).

10. Procédé selon la revendication 9, **caractérisé en ce que** l'impulsion de tension est appliquée pour une durée dans la plage de 10 secondes à 5 minutes.

11. Procédé selon l'une quelconque des revendications 9 à 10, **caractérisé en ce que** la réduction du diamètre de particules est effectuée par gravure chimique.

12. Procédé selon l'une quelconque des revendications 9 et 10, **caractérisé en ce que,** pendant l'étape (c) du procédé, aucune tension ou uniquement une tension plus faible que lors de l'étape (b) est appliquée entre la couche support (1) et la suspension.

13. Procédé selon l'une quelconque des revendications 9 à 12, **caractérisé en ce qu'**une charge de surface des particules (3) est fixée par ajout d'un agent oxydant ou d'un agent réducteur.

14. Procédé selon l'une quelconque des revendications 9 à 13, **caractérisé en ce que** les particules (3) passent partiellement en solution lors de l'étape (c) et **en ce que** le matériau de particules se trouvant en solution se dépose en matrice (4) conjointement avec les particules (3) lors de l'étape (b).

Fig. 1

Fig. 2

EP 3 248 201 B1

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2202837 A1